# EUROPEAN PATENT APPLICATION

(11) **EP 0 693 432 A2**
(43) Date of publication of application: **24.01.1996**
(21) Application number: 95110266.4
(22) Date of filing: 01.07.1995
(51) Int. Cl.: B65D 25/04

(54) **Tray-like pot holder**

(30) Priority: 18.07.1994 DK 284/94 U
(71) Applicant: OS PLASTIC A/S, DK-3520 Farum (DK)
(72) Inventor: Hougaard, Erling, DK-4040 Jyllinge (DK)
(74) Representative: Roerboel, Leif

(57) **Abstract**

A tray-like pot holder, e.g. for a number of pots (12), has a substantially plane lattice (22) with openings (24), into which the pots (12) may be placed in such a manner that a part of their outer wall or a flange (26) extending from the outer wall rests on the edges (28) of the openings (24).

A number of downwardly protruding legs (30) capable of keeping the lattice (22) at a distance from a support (14) at such a height that the pots (12) with their bottom rest on their support (14) without their outer wall or a flange (26) extending outwardly therefrom resting on the edges of the openings (24).

The lattice (22) consists of three sets of straight bars (32,34,36), situated in each set mutually parallel and at equal mutual distances, said three sets being disposed at angles of 120° to each other and being arranged so that between the bars, hexagons (38) as well as triangles (40) are created in a manner implying that the triangles (40) have common sides with adjacent hexagons (38), but no triangle (40) or hexagon (38) has common sides with any other triangle (40) or hexagon (38), respectively, by which a well stiffened construction is achieved.

## Description

The invention relates to a tray-like pot holder, e.g. for a number of plant pots, and of the kind set forth in the preamble of claim 1.

In practice, pot holders of this kind are used in respect of marketing as well as in respect of production, e.g. plant breeding, as an example when the plants are to be placed in a greenhouse for forcing during use of irrigation.

Tray-like pot holders cast in one piece in plastics as a sheet blank are known, in which openings are relieved for insertion of pots. Other pot holders have a more complicated structure being composed of supporting rings in a number corresponding to the pots, said supporting rings being combined in a tray by means of ribs disposed between the rings, the disposal of said ribs stiffening the tray. Experience has shown that such known pot holders may after all most often yield to torsional forces, when they are subjected to loading resulting in deformation of the original shape of the openings, as an example from circular to oval shape.

The object of the invention is to state how drawbacks of this kind can be avoided or at least reduced considerably, at the same time as this object is achieved by a reduced consumption of materials for the tray.

The object according to the invention is achieved by means of the features set forth in the characterizing clause of claim 1.

The circumstance that the lattice referred to is constructed by straight bars in the arrangement stated implies even in itself a construction, that is rather stable when subject to distortion. When the pot holder carries the pots with the latters hanging in the hexagon openings created by the bars, each pot will at its local abutment on the bars contribute to increasing the total stiffness of the tray. In this connection the hexagonal shape of the openings is of considerable importance. The triangles imply that sufficient space will remain between the pots in order that the pots do not overlap each other in their hanging positions.

A suitable positioning of the legs is stated in claim 2.

If the pot holder is to have a basic form which as such has proved appropriate in respect of both marketing and production, the pot holder may advantageously be designed as set forth in claim 3. In the first-mentioned lateral direction, two trays may then be placed close side by side, whereas the trays in the opposite lateral direction may be designed with a protruding or recessed part, respectively, by which two trays disposed end to end can be brought into a position of mutual engagement. This arrangement is achieved as a direct result of the lattice structure characteristic of the invention.

Furthermore, the pot holder according to the invention may be designed as set forth in claims 4 and 5. These features imply that the pots can hang between the outer edges of the traverses of the T or the L, said traverses as such in co-operation with the body part of the T or the L contributing to stiffen the lattice bars.

An embodiment of a tray-like pot holder according to the invention will be explained in more detail in the following detailed portion of the specification with reference to the drawing, in which
Figure 1 schematically shows an oblique view of the pot holder, seen from above,
Figure 2 is a sectional view along the line II-II in Figure 1 with the pot holder lowered to a position in which it rests on its legs, and
Figure 3 is a segment of four pot holders placed on the same level side by side.

The tray-like pot holder 10 shown in the drawing is in the present example used in connection with plant breeding. Plants symbolized by a pot 12 are to be transported to and from a supporting water-conducting mat 14 where upon the pots 10 are to be placed with their bottoms 16 in which openings 18 have been made. Through these openings liquid from the mat 14 can penetrate into the pot filling (not shown). Other openings 20 located at a higher level in the bottom 16 can simultaneously serve to aerate the pot filling.

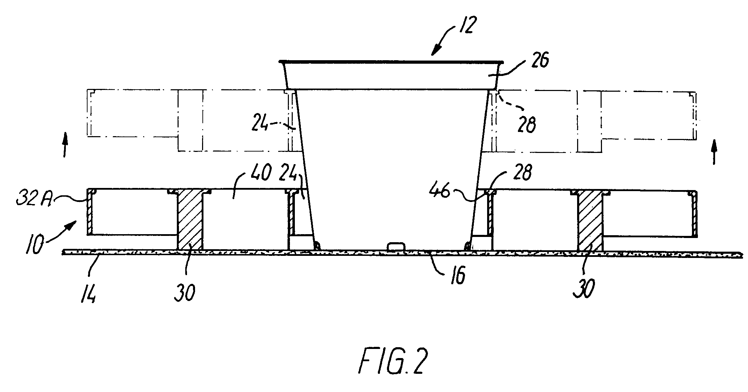

The pot holder comprises a substantially plane lattice 22 with openings 24, in which the pots may be placed. With their side wall the pots may abut supportingly on the bars defining the opening. In the embodiment shown, the pot comprises, however, at the top an outwardly protruding circumferential rim flange 26 with which the pot 12 may rest on the edge 28 of the opening 24, as indicated by broken lines in Figure 2. It is assumed that the pot 12 is still supported by the lattice 22.

The lattice 22 comprises, moreover, a number of downwardly extending legs 30, indicated schematically in the drawing, said legs during lowering of the lattice being capable of retaining the lattice at a distance from the mat 14 at such a height that the pots with their bottom 16 rest on the mat 14 without their outer wall or the flange 26 resting against or on, respectively, the rims 28 of the openings. This position is in Figure 2 indicated by solid lines.

When the necessary liquid absorption has taken place, the pot holder 10 is removed from the mat 14 by lifting it back, i.e. in Figure 2 to the position indicated by broken lines, after which it can be taken away from the mat 14 with the pots hanging in the openings 24.

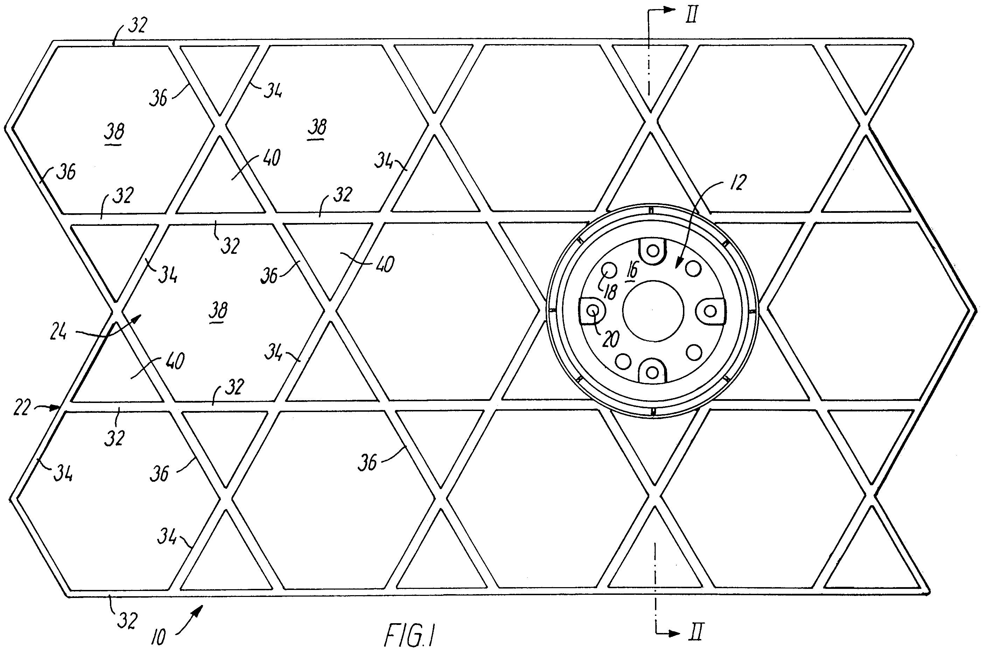

For providing these openings 24, the lattice 22 consists according to the invention of three sets of straight bars, viz. a set of bars 32 situated horizontally in Figure 1, a set of bars 34 inclined upwardly to the right, and a set of bars 36 inclined upwardly to the left. In each set, the bars are mutually parallel and the mutual distance of the bars in the sets is equal. The three sets of bars are disposed at angles of 120° compared to each other and are arranged in such a manner that between the bars, hexagons 38 as well as triangles 40 are created implying that the triangles 40 have common sides with adjacent hexagons 38, but no other triangle 40 or hexagon 38 has common sides with any other triangle 40 or hexagon 38, respectively.

Compared to the prior art mentioned in the introduction, the effect achieved by this feature is a particularly well-stiffened as well as material-saving supporting lattice structure.

In the embodiment of Figure 2, the legs 30 are placed in the area of the triangles 40.

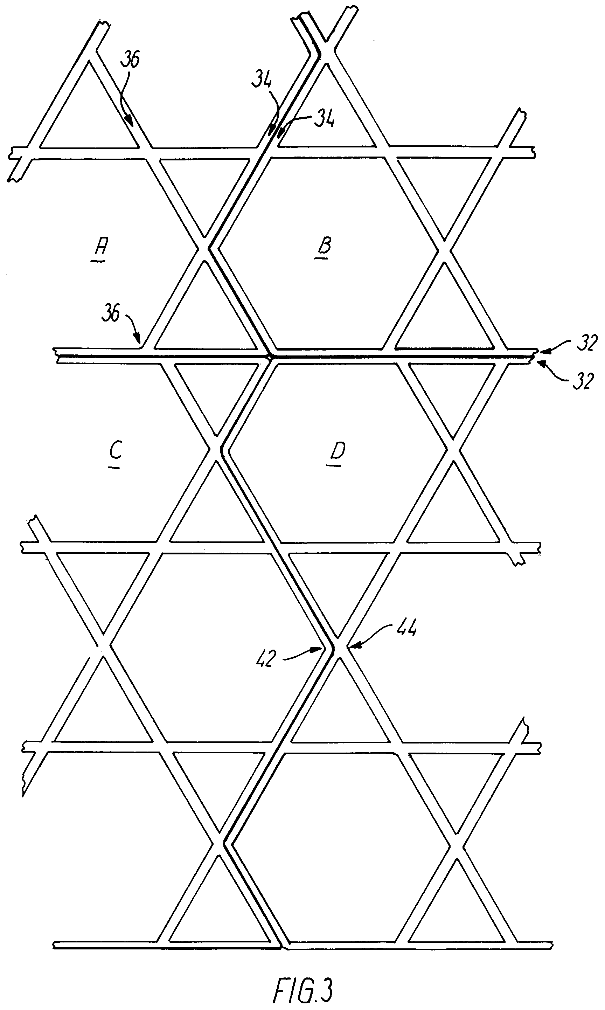

The embodiment shown in Figure 1 has the rectangular basic form which is also used in known pot holders. Based on this basic form, the embodiment of the invention illustrated in Figure 1 is characteristic in that the outer edge of the tray in one lateral direction of the rectangle is formed by parallel bars 32 belonging to one set of the bars, whereas the outer edge of the tray in the other lateral direction of the rectangle is formed by bars 34 and 36 from the two other sets of bars. As illustrated in Figure 3, a number of trays may then in each of the directions be placed side by side close to each other, whereby the trays in one lateral direction being horizontal in the drawing from tray to tray (A against C, and B against D) abut on each other along the bars 32 forming the lateral edges of the trays, whereas in the other lateral direction being vertical in the drawing from tray to tray (A against B, and C against D) they abut on each other along the bars 34 and 36, respectively, forming the other lateral sides of the trays. As a consequence of the angularity of these bars, a connection of engagement is thereby created consisting of horizontally protruding parts indicated by an arrow 42 and recessed parts indicated by an arrow 44 with which a connection of engagement is achieved between the trays.

As indicated in Figure 2, the bars 32,34,36 of the lattice have a T-shaped cross-section. At least in respect of the bars 32, it may also be advantageous to settle for a cross-section in the shape of an inverted L 32A, the traverse of which protrudes inwardly in such a manner that the traverse and body part of the L at the outwardly facing side of the bars present a smooth common abutting surface. Two adjoining trays may then with these surfaces abut closely on each other. At the bars confining an opening, the traverse of the T or the L will then constitute a rim 46 forming the opening edges 28, said rim protruding laterally from the body part of the T or the L. Between the lateral wall of a pot 12 placed in the lattice 22 and the body part of the T or the L, a gap is generated securing that a pot 12 can be placed in and again removed from the lattice without any risk of being wedged in the opening 24. Furthermore, the rim 46 increases the stiffness of the bars.

## Claims

1. Tray-like pot holder, e.g. for a number of plant pots (12), and of the kind consisting of
a) a substantially plane lattice (22) with openings (24), into which the pots (12) may be placed in such a manner that a part of their outer wall or a flange (26) extending from the outer wall rests on the edges (28) of the openings (24), and
b) a number of downwardly protruding legs (30) capable of keeping the lattice (22) at a distance from a support (14) at such a height that the pots (12) with their bottom rest on their support (14) without their outer wall or a from here outwardly extending flange (26) resting on the edges of the openings (24),
**characterized** in that
c) the lattice (22) consists of three sets of straight bars (32,34,36) situated in each set mutually parallel and at equal mutual distances, said three sets being disposed at angles of 120° to each other and being arranged in such a manner that between the bars, hexagons (38) as well as triangles (40) are created implying that the triangles (40) have common sides with adjacent hexagons (38), but no triangle (40) or hexagon (38) has common sides with any other triangle (40) or hexagon (38), respectively.

2. Tray-like pot holder according to claim 1, **characterized** in that the legs (30) are placed in the area of the triangles (40).

3. Tray-like pot holder according to claim 1 or 2, by which the pot holder has a rectangular basic form, **characterized** in that the outer edge of the tray in one lateral direction of the rectangle is formed by parallel bars (32) belonging to one set of the bars, whereas the outer edge of the tray in the other lateral direction of the rectangle is formed by bars (34,36) from the two other sets of bars.

4. Tray-like pot holder according to any one or any of the claims 1-3, **characterized** in that the bars (32,34,36) have a T-shaped cross-section.

5. Tray-like pot holder according to any one or any of the claims 1-3, **characterized** in that the bars (32,34,36) have a cross-section of an inverted L.
